Europäisches Patentamt

**European Patent Office**

**Office européen des brevets**

(19)

(11) Veröffentlichungsnummer: **0 230 611**
**B1**

(12) **EUROPÄISCHE PATENTSCHRIFT**

(45) Veröffentlichungstag der Patentschrift:
**27.12.89**

(21) Anmeldenummer: **86117557.8**

(22) Anmeldetag: **17.12.86**

(51) Int. Cl.⁴: **B62D 29/04**

(54) Kunststoffbauteil, insbesondere stossaufnehmendes Karosserieaussenteil für Kraftfahrzeuge.

(30) Priorität: **24.12.85 DE 3546050**

(43) Veröffentlichungstag der Anmeldung:
**05.08.87 Patentblatt 87/32**

(45) Bekanntmachung des Hinweises auf die Patenterteilung:
**27.12.89 Patentblatt 89/52**

(84) Benannte Vertragsstaaten:
**DE FR GB IT SE**

(56) Entgegenhaltungen:
**DE-A- 2 238 676**
**DE-A- 2 548 398**
**DE-A- 3 345 576**

(73) Patentinhaber: **FORD-WERKE AKTIENGESELLSCHAFT,**
**Werk Köln-Niehl Henry-Ford-Strasse Postfach 60 40 02,**
**D-5000 Köln 60(DE)**

(84) Benannte Vertragsstaaten: **DE IT SE**

(73) Patentinhaber: **FORD MOTOR COMPANY LIMITED,**
**Eagle Way, Brentwood Essex CM13 3BW(GB)**

(84) Benannte Vertragsstaaten: **GB**

(73) Patentinhaber: **FORD FRANCE SOCIETE ANONYME,**
**344 Avenue Napoléon Bonaparte B.P. 307, F-92506 Rueil Malmaison Cedex(FR)**

(84) Benannte Vertragsstaaten: **FR**

(72) Erfinder: **Vogt, Hans, Kielsberg 36, D-5063 Overath(DE)**
Erfinder: **Spiegel, Erwin, Nussbaumweg 3,**
**D-5010 Bergheim(DE)**
Erfinder: **Hürten, Oskar, Weissdornweg 130,**
**D-5000 Köln(DE)**

(74) Vertreter: **Ritzkowsky, Harald, Dipl.-Ing., Ford-Werke Aktiengesellschaft Patentabteilung NH/DRP Henry-Ford-Strasse, D-5000 Köln 60(DE)**

## Beschreibung

Kunststoffbauteil, insbesondere stoßaufnehmendes Karosserieaußenteil für Kraftfahrzeuge

Die Erfindung geht aus von einem Kunststoffbauteil, insbesondere einem stoßaufnehmenden Karosserieaußenteil für Kraftfahrzeuge der im Oberbegriff des Patentanspruches 1 erläuterten Art.

Aus der DE-A1 3 345 576 ist ein Kunststoffbauteil der im Oberbegriff des Patentanspruches 1 erläuterten Art bekannt, das als Sandwich-Bauteil mit dichten und festen Innen- und Außendeckschichten mit einer weichen Kernschicht aus Papierstegen, Waben oder Hartschaum ausgebildet ist.

Bei diesem Kunststoffbauteil sind örtlich angeordnete metallische Verstärkungen für den Anschluß von Gelenk- und Verschlußteilen vorgesehen, es weist jedoch keine Vorkehrungen zum Einleiten einer vorbestimmten Verformung bei Aufprallkräften auf.

Aus der DE-A1 2 548 398 ist ein Kunststoffbauteil, insbesondere stoßaufnehmendes Karosserieaußenteil für Kraftfahrzeuge bekannt, das als einschichtiges Bauteil ausgebildet ist und an seinen innenliegenden Oberflächen mit Querschnittseinschnürungen versehen ist, damit es bei Aufprallkräften an diesen vorbestimmten Stellen bricht. Bei diesem Kunststoffteil wird zwar die einem Aufprall nachfolgende Reparatur durch die vorbestimmten Bruchkanten vereinfacht, das Kunststoffbauteil selbst kann jedoch während des Aufpralles kaum Aufprallkräfte aufnehmen und abbauen.

Ein solcher Abbau von Aufprallkräften ist für die Sicherheit der Fahrgäste eines Kraftfahrzeuges anzustreben und ist bei Blechbauteilen, insbesondere stoßaufnehmende Karosserieaußenteilen für Kraftfahrzeuge aus der DE-A 2 238 676 sinngemäß zu entnehmen.

Die Aufgabe der Erfindung ist es, ein Kunststoffbauteil, insbesondere ein stoßaufnehmendes Karosserieaußenteil für Kraftfahrzeuge, welches als Sandwich-Bauteil mit dichten und festen Innen- und Außendeckschichten mit einer weichen Kernschicht aus Papierstegen, Waben oder Hartschaum ausgebildet ist, derart auszugestalten, daß definierte, innenliegende Schwächungsstellen vorgesehen werden, an denen sich Aufprallkräfte zuerst auswirken um das Kunststoffbauteil derart zu zerstören, daß eine nennenswerte Energieaufnahme bei dieser Zerstörung erzielt wird, wodurch die auf die Fahrzeuginsassen einwirkenden Aufprallkräfte abgebaut werden können.

Gemäß der Erfindung wird diese Aufgabe gelöst, indem ein Kunststoffbauteil gemäß dem Oberbegriff des Patentanspruches 1 die im Kennzeichenteil des Patentanspruches 1 aufgezeigten Merkmale aufweist.

In den Ansprüchen 2 bis 3 sind zweckmäßige Ausführungsformen der Erfindung erläutert.

Dadurch, daß in bestimmten Bereichen, insbesondere der konvexen Außenfläche, aber auch der Innenfläche als definierte, innenliegende Schwächungsstellen, an denen sich Aufprallkräfte zuerst auswirken, eine oder mehrere von der Kernschicht losgelöste Teilflächen vorgesehen werden, wobei die zulässige kritische Druckspannung der losgelösten Teilflächen unterhalb der Aufprallspitzlast des Bauteiles eingestellt ist, wird erreicht, daß sich an diesen Teilflächen bei Aufprallkräften zuerst ein Abschälen der Deckschichten von der Kernschicht einstellt, die von hieraus fortschreitend weiterläuft, wodurch die Aufprallkräfte durch die Summe der Biege- und Schälkräfte beim Ablösen der Deckschichten von der Kernschicht abgebaut werden.

Die Erfindung wird anhand eines in der beiliegenden Zeichnung gezeigten Ausführungsbeispieles näher erläutert.

Es zeigt:

Fig. 1 eine Schrägrißansicht eines Vorderkotflügels eines Kraftfahrzeuges in Sandwich-Bauart;
Fig. 2 einen Schnitt entlang der Linie II-I in Fig. 1 mit den losgelösten Teilflächen;
Fig. 3 eine Schrägrißansicht einer Motorhaube eines Kraftfahrzeuges als Sandwich-Bauteil und
Fig. 4 einen Schnitt entlang der Linie IV-IV in Fig. 3 mit den losgelösten Teilflächen.

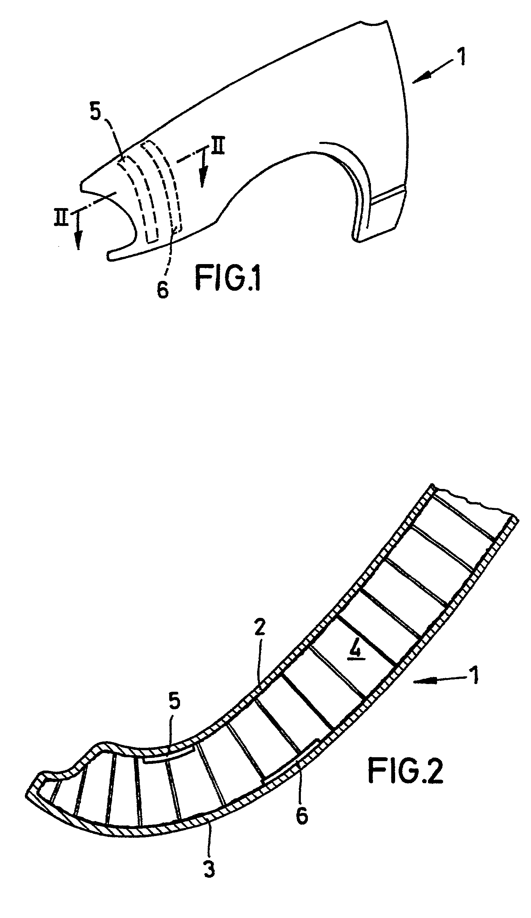

Der in den Figuren 1 und 2 gezeigte Vorderkotflügel 1 eines Kraftfahrzeuges ist als Sandwich-Bauteil ausgebildet. Der Vorderkotflügel 1 besteht somit aus einer dichten und festen Innendeckschicht 2 und einer ebensolchen Außendeckschicht 3, die miteinander über eine weiche Kernschicht 4 aus Papierstegen, Waben oder Hartschaum miteinander verbunden sind.

An bestimmten definierten Stellen des Vorderkotflügels 1 sind zwischen der Innendeckschicht 2 und der Kernschicht 4 bzw. zwischen der Außendeckschicht 3 und der Kernschicht 4 losgelöste Teilflächen 5 bzw. 6 vorgesehen, in deren Bereich die Verbindung zwischen den Innen- und Außendeckschichten 2 und 3 und der Kernschicht 4 unterbrochen ist. Die Trennung zwischen den Deckschichten 2 und 3 und der Kernschicht 4 kann hierbei in vorteilhaft einfacher Weise durch eine örtliche Trennfolieneinlage in Form von Aluminium PE-Folien oder anderen Trennmittelbeschichtungen bewirkt werden. Bei Großserienfertigung können die gewünschten Schwächungsstellen durch Aufdrucken entsprechender Flächen aus Trennmitteln auf die vorbereitete Kernschicht, dem sogenannten Pre-Preg erstellt werden.

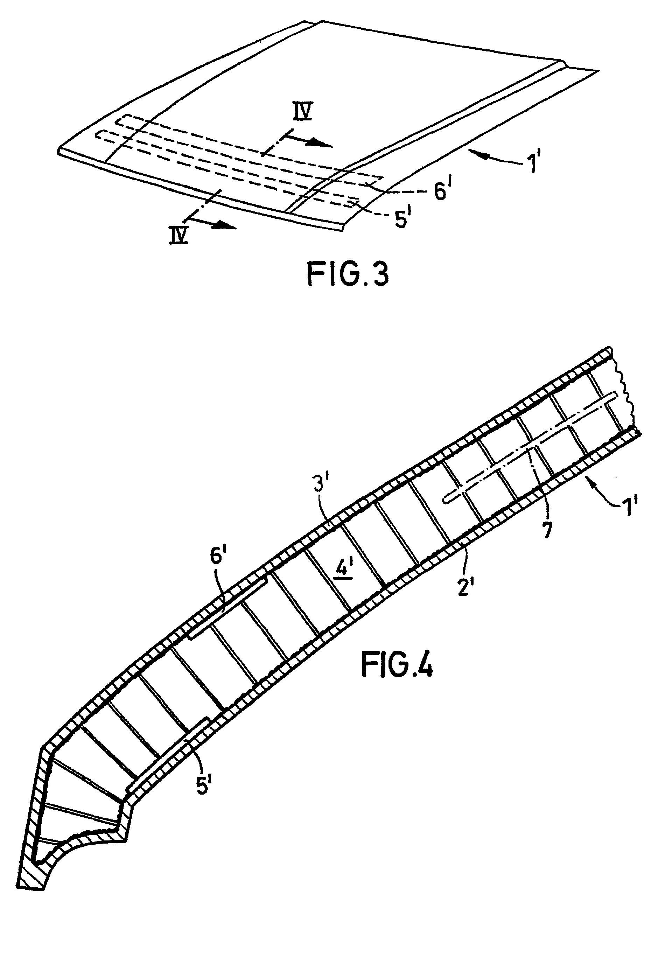

Bei der in den Figuren 3 und 4 gezeigten Motorhaube 1E eines Kraftfahrzeuges sind die Verhältnisse in gleicher Weise gegeben, so daß die einzelnen Bauteile mit dem gleichen nur mit einem Strich-Index versehenen Bezugszeichen versehen wurden. Die Funktionsweise ist dementsprechend die gleiche wie in Verbindung mit den Figuren 1 und 2 erläutert.

An der Motorhaube 1E ist in ihrem mittleren Bereich noch eine weitere Ausführungsform der Erfindung in Strich-Punkt-Linien angedeutet, die eine losgelöste Teilfläche 7 innerhalb der Kernschicht 4E andeutet, die z. B. durch zwei aufeinanderliegende, nicht verbundene Kernschichtteile oder durch einen örtlich geschnittenen Teil der Kernschicht gebildet wird. In diesem Fall wird nicht eine einseitige Faltenbildung eingeleitet sondern es wird ein balgförmiges Aufspreizen des Sandwich-Bauteiles eingeleitet, bei dem die der losgelösten Teilfläche 7 benachbart liegenden nicht losgelösten Flächen der Kernschicht zu zerreißen beginnen und hierdurch die Aufprallkräfte aufzehren.

Die definierte Anordnung und der Verlauf der losgelösten Teilflächen 5, 6 und 5E, 6E bzw. 7 kann rechnerisch oder experiementel so ermittelt und ausgelegt werden, daß das Sandwich-Bauteil in diesen Flächenzonen eine soweit geringere örtliche Stabilität erhält, als die Spitzendrucklast als Schnittkraft erzeugen würde. Dadurch kann eine örtliche Wellenbildung am Sandwich-Bauteil eingeleitet werden.

## Patentansprüche

1. Kunststoffbauteil (1 bzw. 1'), insbesondere stoßaufnehmendes Karosserieaußenteil für Kraftfahrzeuge, wie Motorhaube, Kotflügel und dergleichen, welches als Sandwich-Bauteil mit dichten und festen Innen- und Außendeckschichten (2 und 3 bzw. 2' und 3') mit einer weichen Kernschicht (4 bzw. 4') aus Papierstegen, Waben oder Hartschaum ausgebildet ist, dadurch gekennzeichnet, daß in bestimmten Bereichen, insbesondere der konvexen Außenfläche, aber auch der Innenfläche, als definierte, innenliegende Schwächungsstellen, an denen sich Aufprallkräfte zuerst auswirken, eine oder mehrere von der Kernschicht losgelöste Teilflächen (6 bzw. 6' und 5 bzw. 5') vorgesehen werden, wobei die zulässige kritische Druckspannung der losgelösten Teilflächen (6 bzw. 6' und 5 bzw. 5') unterhalb der Aufprallspitzenlast des Bauteiles eingestellt ist.

2. Kunststoffbauteil nach Anspruch 1, dadurch gekennzeichnet, daß die losgelösten Teilflächen (6 bzw. 6' und 5 bzw. 5') durch örtliche Trennfolieneinlagen aus Aluminium, PE-Folie oder anderen trennmittelbeschichteten Folien gebildet ist.

3. Kunststoffbauteil nach Anspruch 1, dadurch gekennzeichnet, daß die losgeösten Teilflächen (7) innerhalb der Kernschicht (4') durch zwei aufeinanderliegende nicht verbundene Kernschichtstücke oder durch eine örtlich geschnittene Kernschicht gebildet sind.

## Claims

1. A plastics construction member (1 or 1' respectively), in particular a shock-absorbing external bodywork member for motor vehicles, such as an engine bonnet, mudguard and the like, which is constructed as a sandwich construction member with thick and rigid inner and outer covering layers (2 and 3, or 2' and 3' respectively) with a soft core layer (4 or 4' respectively) of paper webs, honeycomb structures or hard foam material, characterized in that one or more partial surfaces (6 or 6' and 5 or 5' respectively) detached from the core layer are provided in specific areas, in particular the convex outer surface but also the inner surface, as defined internal points of weakness, on which forces of impact act initially, the permissible critical compressive stress of the detached partial surfaces (6 or 6' and 5 or 5' respectively) being set below the impact load peak of the construction member.

2. A plastics construction member according to Claim 1, characterized in that the detached partial surfaces (6 or 6' and 5 or 5' respectively) are formed by local separating foil inserts of aluminium, PE foil or other foils coated with separating means.

3. A plastics construction member according to Claim 1, characterized in that the detached partial surfaces (7) inside the core layer (4') are formed by two core layer members superposed one above the other and not joined or by a locally but core layer.

## Revendications

1. Elément structurel en matière plastique (1 ou 1'), notamment élément extérieur de carrosserie, absorbant les chocs, pour véhicule automobile, tel que capot de moteur, aile et analogue, qui est réalisé sous la forme d'un élément structurel en sandwich comportant des couches intérieure et extérieure de recouvrement (2 et 3 ou 2' et 3') étanches et rigides, et une couche centrale souple (4 ou 4') en traverses de carton, nid-d'abeilles ou mousse dure, caractérisé en ce que, dans des zones déterminées, notamment dans les surfaces extérieures convexes, mais aussi dans les surfaces intérieures, il est prévu, comme emplacements d'affaiblissement, définis et se trouvant à l'intérieur, sur lesquels s'exercent d'abord les efforts de collision, une ou plusieurs surfaces partielles (6 ou 6' et 5 ou 5') séparées de la couche centrale, la contrainte critique admissible de compression de ces surfaces partielles séparées (6 ou 6' et 5 ou 5') étant fixée inférieure à la charge maximale de collision de l'élément structurel.

2. Elément structurel en matière plastique suivant la revendication 1, caractérisé en ce que les surfaces partielles séparées (6 ou 6' et 5 ou 5') sont formées à l'aide de films intercalaires de séparation constitués de films d'aluminium, de polyéthylène ou d'autres films revêtus d'agents séparateurs.

3. Elément structurel en matière plastique suivant la revendication 1, caractérisé en ce que les surfaces partielles séparées (7) sont formées à l'intérieur de la couche centrale (4') à l'aide de deux portions de couche centrale disposées l'une au-dessus de l'autre et non reliées ou à l'aide d'une couche centrale découpée localement.

FIG.1

FIG.2

FIG.3

FIG.4